# EUROPEAN PATENT APPLICATION

(11) **EP 4 770 045 A1**
(43) Date of publication of application: **01.07.2026**
(21) Application number: 25866456.4
(22) Date of filing: 21.08.2025
(51) Int. Cl.: H04L 61/10, H04L 61/5014, H01M 10/42, H04L 101/622

(54) **COMMUNICATION CONTROL DEVICE AND COMMUNICATION CONTROL METHOD OF BATTERY SYSTEM**

(30) Priority: 13.09.2024 KR 20240125284
(71) Applicant: LG ENERGY SOLUTION, LTD., Seoul 07335 (KR)
(72) Inventor: PAEK, Seung Kyu, Daejeon 34122 (KR); LEE, Seongkeun, Daejeon 34122 (KR)
(74) Representative: Plasseraud IP
(86) International application number: PCT/KR2025/012730
(87) International publication number: WO 2026/059151

(57) **Abstract**

A communication control method according to an embodiment of the present invention is a communication control method of a battery system control device interworking with one or more battery management systems (BMSs) and a network switch, and may comprise the steps of: monitoring a dynamic host configuration protocol (DHCP) allocation process between the network switch and each battery management device; collecting client internet protocol (IP) addresses and media access control (MAC) addresses during the monitoring; and matching and storing the IP addresses with battery management devices having MAC addresses matched with the collected MAC addresses.

## Description

### [Technical Field]

This application claims priority to and the benefit of Korean Patent Application No.10-2024-0125284 filed in the Korean Intellectual Property Office on September 13, 2024 the entire contents of which are incorporated herein by reference.

The present invention relates to a communication control apparatus of a battery system and a communication control method thereof, and more particularly, to a communication control apparatus of a battery system including a battery management apparatus and a network switch and a communication control method thereof.

### [Background Art]

Secondary batteries, capable of recharging and reuse, are manufactured as battery modules or battery packs by connecting a plurality of battery cells in series based on the required output capacity, serving as power sources for diverse applications. These batteries are used in small, high-tech electronic devices like smart phones, as well as a variety of fields including electric bicycles, electric vehicles, and energy storage systems (ESS).

A battery pack is a structure including a plurality of battery cells. Overvoltage, overcurrent, and overheating in some battery cells may compromise the safety and operational efficiency of the battery pack (or battery module), making detection of these defects essential. Thus, a battery pack is usually equipped with a battery management system (BMS) that measures the voltage of each battery cell and monitors and controls the voltage state of the cells based on these measurements.

Meanwhile, in addition to the BMS for the battery pack, a BMS is deployed within a battery system, for a battery rack including a plurality of battery packs and a battery system controller (BSC) is further deployed to comprehensively manage these BMSs.

For the BSC to control multiple BMSs, the BSC needs to communicate with the BMSs. The BSC can communicate with multiple BMSs based on a list of IP addresses. The BSC can communicate with multiple BMSs using a network switch based on a pre-stored list of IP addresses and the medium access control (MAC) address list of the BMS. This requires IP address configuration for the BSC and network switch.

However, this existing IP address configuration in battery systems remains manual, resulting in inconveniences in battery system installation and operation.

Among the prior art documents relevant to the present invention, KR 10-2024-0109549 A is of some relevance.

### [Detailed Description of the Invention]

### [Technical Problem]

To obviate one or more problems of the related art, embodiments of the present disclosure provide a communication control method of a battery system control apparatus interfacing with one or more battery management systems (BMS) and a network switch.

To obviate one or more problems of the related art, embodiments of the present disclosure also provide a communication control apparatus using the communication control method.

### [Technical Solution]

In order to achieve the objective of the present disclosure, a communication control method, for a battery system control apparatus that connected to one or more battery management apparatus (BMS) and a network switch, may include monitoring a Dynamic Host Configuration Protocol (DHCP) allocation process between the network switch and each battery management apparatus; collecting client IP (Internet Protocol) addresses and MAC (Media Access Control) addresses during the monitoring; and matching and storing the IP addresses with battery management apparatuses having MAC addresses that match the collected MAC addresses.

The method may further include sending a User Datagram Protocol (UDP) reset command to one or more battery management apparatuses to which the battery system control apparatus is connected when the battery system control apparatus is initially powered up.

The method may further include preliminarily storing MAC addresses of the one or more battery management apparatuses in a storage device.

The matching and storing of the IP addresses with the battery management apparatuses having a MAC address matching the collected MAC address may include identifying, among the MAC addresses of one or more battery management apparatuses (BMSs) stored previously, a MAC address matching the collected MAC address; and matching and storing the collected IP address with the battery management apparatus having the identified MAC address.

The method may further include communicating with the one or more battery management apparatuses using the IP addresses which have been matched and stored with the one or more battery management apparatuses.

Meanwhile, the collecting of the client IP addresses and MAC addresses during the monitoring may include collecting the MAC address of the BMS included in a DHCP Discover or DHCP Request message; and collecting the IP address allocated to the BMS included in a DHCP response (Ack) message.

According to another embodiment of the present disclosure, a communication control apparatus of a battery system including one or more battery management apparatuses (BMSs) and a network switch may include at least one processor; and a memory configured to store at least one instruction executed by the at least one processor.

Here, the at least one instruction may include an instruction to monitor a Dynamic Host Configuration Protocol (DHCP) allocation process between the network switch and each battery management apparatus; an instruction to collect client IP (Internet Protocol) addresses and MAC (Media Access Control) addresses during the monitoring; and an instruction to match and store the IP addresses with battery management apparatuses having MAC addresses that match the collected MAC addresses.

The at least one instruction may further include an instruction to send a User Datagram Protocol (UDP) reset command to one or more battery management apparatuses to which the battery system control apparatus is connected when the battery system control apparatus is initially powered up.

The at least one instruction may further include an instruction to preliminarily store MAC addresses of the one or more battery management apparatuses in a storage device.

The instruction to match and store the IP addresses with the battery management apparatuses having a MAC address matching the collected MAC address may include an instruction to identify, among the MAC addresses of one or more battery management apparatuses (BMSs) stored previously, a MAC address matching the collected MAC address; and an instruction to match and store the collected IP address with the battery management apparatus having the identified MAC address.

The at least one instruction may further include an instruction to communicate with the one or more battery management apparatuses using the IP addresses which have been matched and stored with the one or more battery management apparatuses.

The instruction to collect the client IP addresses and MAC addresses during the monitoring may include an instruction to collect the MAC address of the BMS included in a DHCP Discover or DHCP Request message; and an instruction to collect the IP address allocated to the BMS included in a DHCP response (Ack) message.

### [Advantageous Effects]

According to the above-described embodiment of the present invention, IP allocation to the BMS can be automatically performed, even if only inputting MAC address and managing are performed in the battery system control apparatus, thereby providing convenience in maintenance and facilitating analysis of communication abnormality cause.

### [Brief Description of the Drawings]

FIG. 1 illustrates a block diagram of a battery system architecture to which embodiments of the present invention can be applied.
FIG. 2 is a diagram illustrating the concept of a general IP address allocation method implemented in a battery system.
FIG. 3 is a diagram illustrating the concept of a method for allocating IP addresses in a battery system according to embodiments of the present invention.
FIG. 4 is a flowchart illustrating the DHCP IP address allocation method which is used in embodiments of the present invention.
FIG. 5 is an operational flowchart of a communication control method for a battery system according to embodiments of the present invention.
FIG. 6 is a block diagram of a communication control apparatus of a battery system according to embodiments of the present invention.

100: BSC
200: BMS (RBMS)
300: Network Switch

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit of a battery that is configured to charge and discharge electrical energy for use and a battery pack refers to an assembly including a group of battery cells that are electrically connected.

A battery rack refers to a system of a single structure which is assembled by connecting module units set by a battery manufacturer in series/parallel and may be monitored and controlled by a battery management apparatus/system (BMS). A battery rack may include several battery packs (or battery modules) and a battery protection unit or any other protection device.

A battery bank refers to a group of large-scale battery rack systems configured by connecting a plurality of battery racks in parallel. A bank BMS for a battery bank may monitor and control several rack BMSs, each of which manages a battery rack.

Hereinafter, exemplary embodiments of the present invention will be described in detail with reference to the accompanying drawings.

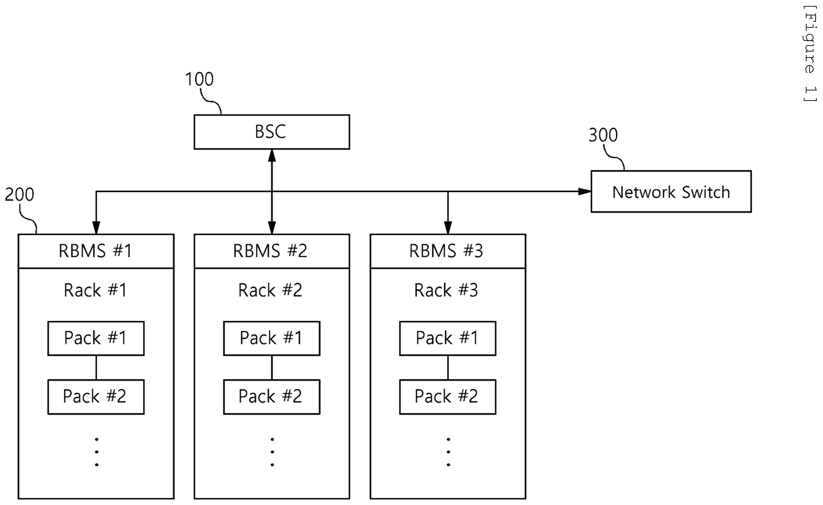

FIG. 1 illustrates a block diagram of a battery system architecture to which embodiments of the present invention can be applied.

In the battery system of FIG. 1, a battery rack may include a plurality of battery packs and a battery bank may include a plurality of battery racks form. The battery system illustrated in FIG. 1 may, for example, be a part of an energy storage system.

Here, a battery management system (BMS) may be installed in each of the battery packs, battery racks, and battery banks. In FIG. 1, the battery pack may include a plurality of battery cells connected in series. The battery pack may be connected to a load through positive and negative terminals and perform charge/discharge operations. The most commonly used battery cells are lithium-ion (Li-Ion) batteries.

The pack BMS may monitor the current, voltage, and temperature of each battery pack to be managed, and calculate the State of Charge (SOC) based on monitoring results and control charging and discharging.

To perform these operations, the BMS may include various components, such as fuses, current sensing elements, thermistors, switches, and balancers. Most BMSs include a Micro Controller Unit (MCU) or Battery Monitoring Integrated Chip (BMIC) to interface and control these components. The BMIC may be an IC-type component located within the BMS, which measures information such as voltage, temperature, and current of battery cells/modules.

Meanwhile, the Rack BMS (RBMS) 200 may be connected to one or more pack BMSs within the rack and receive monitoring results for each pack from each pack BMS. Each RBMS 200 may monitor the current, voltage, and temperature of each battery rack and diagnose internal battery conditions such as short circuits, over-voltages, and various sensor failures, based on the monitoring results.

A plurality of rack BMSs 200 may be connected to a Battery System Controller (BSC) 100, which manages and controls the entire battery system. Depending on the system, the BSC may also be referred to as a bank battery management system (BBMS).

The BMS may also monitor battery cells, read cell voltages, and transmit these data to other systems connected to the battery. For this, the BMS may include a communication module for communicating with other systems within a device to which the battery system is applied. The BMS communication module may communicate with other systems within the device using a Controller Area Network (CAN). Here, components, modules, or systems within the BMS may be interconnected via a CAN bus. For example, a plurality of pack BMSs and a rack BMS(RBMS) 200 may exchange data via a Controller Area Network (CAN) communication method.

A battery system, as illustrated in FIG. 1, may include a battery system control apparatus 100, a plurality of rack BMSs 200, and a network switch 300. While the battery system control apparatus 100 and the network switch 300 are depicted as separate components in FIG. 1, the battery system control apparatus 100 and the network switch 300 may also be implemented as an integrated single apparatus.

The battery system control apparatus 100 may communicate with a plurality of RBMSs 200 via a network switch 300. The network switch 300 may be a network device that connects network lines to the BMSs. The network switch may allow communication between the battery system control apparatus 100 and the rack BMSs or between the rack BMSs.

According to embodiments of the present invention, the connection between the battery system control apparatus 100 and the network switch 300, and between the network switch 300 and the plurality of RBMSs 200, may be via a wired or wireless network. In one embodiment, the wired or wireless network may be an Ethernet communication network, allowing data to be transmitted and received between the battery system control apparatus 100, the network switch 300, and the plurality of RBMSs 200 using Transmission Control Protocol(TCP)/Internet Protocol(IP) packets.

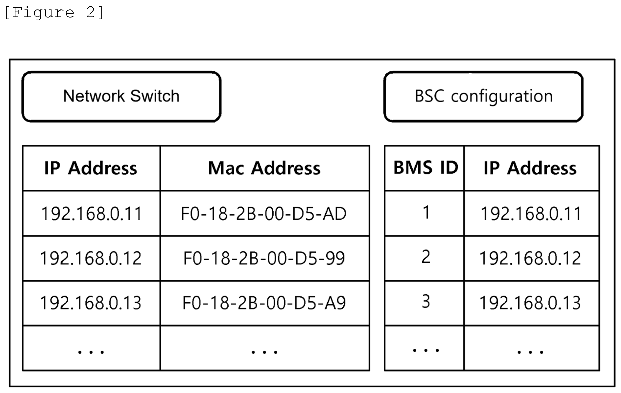

FIG. 2 is a diagram illustrating the concept of a general IP address allocation method implemented in a battery system.

As previously described, data may be transmitted and received between the battery system control apparatus 100, the network switch 300, and a plurality of RBMSs 200 using TCP/IP packets. For data transmission and reception among these entities using TCP/IP packets, an IP address must be assigned to each entity. Here, TCP/IP is a protocol combining IP, the Internet Protocol for packet communication, and TCP, the Transmission Control Protocol.

A general IP allocation method for RBMSs involves pre-entering a RBMS MAC address into the network switch and allocating a corresponding IP address. The media access control (MAC) address is a unique address assigned to each device and is also called a physical address or Ethernet hardware address.

Referring to FIG. 2, a MAC address consists of 48 bits, such as "FO-18-2B-00-D5-AD," and is required for communication over Ethernet. While communication within the same network is possible using just a MAC address, IP addresses are required to communicate with hosts on other networks. Here, the Internet Protocol (IP) address is a unique number used by devices on a computer network to identify and communicate with each other. Using the IP address, messages are transmitted on behalf of the sender and delivered to an intended destination forwarding to the receiver.

As illustrated in FIG. 2, the network switch manages the IP addresses assigned to each RBMS MAC address in a table format. Furthermore, the IP address assigned to each RBMS identifier (ID) may be directly entered into the battery system control apparatus by a system administrator and these IP addresses may be managed in a table format.

However, this general method requires manual configuration of IP addresses for the network switch and battery system control apparatus each time setting the site environment where the battery is installed, resulting in installation inconveniences. Furthermore, considering that the battery system control apparatus and the RBMS may boot at different times, the battery system control apparatus cannot determine the IP assignment time for the RBMS.

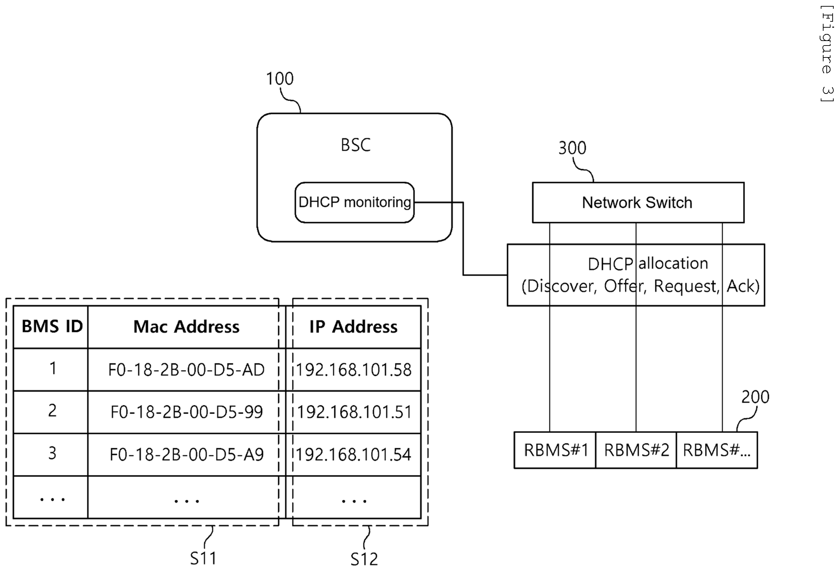

FIG. 3 is a diagram for illustrating the concept of a method for allocating IP addresses in a battery system according to embodiments of the present invention.

According to embodiments of the present invention, the battery system control apparatus 100 may recognize the IP address of a BMS by monitoring the DHCP allocation process between the BMS 200 and the network switch 300. The Dynamic Host Configuration Protocol (DHCP) is a protocol that automatically allocates IP addresses, subnet masks, gateway IP addresses, etc. to devices. The DHCP allocation may be performed by sequentially performing the DHCP Discover process, the DHCP Offer process, the DHCP Request process, and the DHCP Response process.

Referring to FIG. 3, the battery system control apparatus 100 may store and manage the MAC addresses of one or more BMSs (e.g., RBMSs) with which the battery system control apparatus 100 wants to communicate in advance (S11). The MAC addresses of the BMSs may be entered by an administrator or received from a separate device.

Thereafter, when the Dynamic Host Configuration Protocol (DHCP) allocation begins between the network switch and each battery management apparatus, the battery system control apparatus 100 may monitor the DHCP allocation process and collect client IP addresses and MAC (Media Access Control) addresses during the monitoring process.

The battery system control apparatus 100 may match the collected IP addresses with battery management apparatuses having MAC addresses which match the collected MAC addresses, and store them (S12). More specifically, the battery system control apparatus 100 may identify a MAC address matching the collected MAC address among the MAC addresses of one or more battery management apparatuses (BMS) previously stored in a storage device, etc., and match and store the collected IP address with the battery management apparatuses having the identified MAC address.

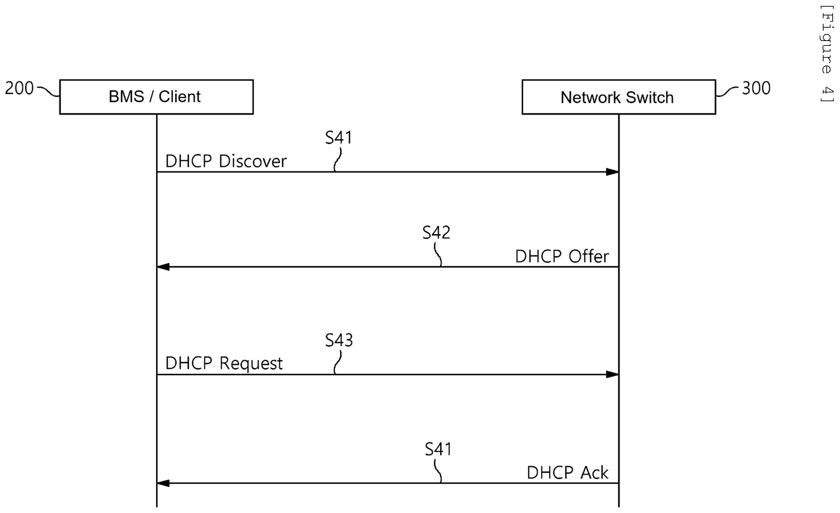

FIG. 4 is a flowchart illustrating the DHCP IP address allocation method which is used in embodiments of the present invention.

The DHCP IP address allocation procedure may be performed between the BMS 200 and the network switch 300 and include four detailed steps. Referring to FIG. 4, the DHCP IP address allocation may be performed in the following order: DHCP Discover S41, DHCP Offer S42, DHCP Request S43, and DHCP Response (Ack) S44.

The DHCP Discover S41 is a process by which a client searches for a DHCP server, which involves broadcasting a message (DHCP packet) including necessary information and client information to a DHCP server located on an Ethernet network. In embodiments of the present invention, the client is a BMS, and the DHCP server may be a network switch. Here, the DHCP Discover message includes the MAC address of the client.

The DHCP Offer message S42 is a reply message sent by the DHCP server to the client upon receiving the client's message, which transmits a message including necessary information, such as an IP address to be used by the client, a subnet mask requested by the client, a gateway, and DNS.

The DHCP Request message S43 is a message in which the client responds to the DHCP server (network switch) that the client has selected network information and wants to use the selected network.

The DHCP Response (Ack) message S44 is a message which sends information to be allocated (information sent in the Offer) based on the information requested by the client and allocates an IP address to the client.

The battery system control apparatus 100 according to embodiments of the present invention may collects IP addresses allocated to each BMS included in the DHCP Response (Ack) message S44. The battery system control apparatus 100 according to embodiments of the present invention may also collect the client's MAC address included in the DHCP Discover or DHCP Request message.

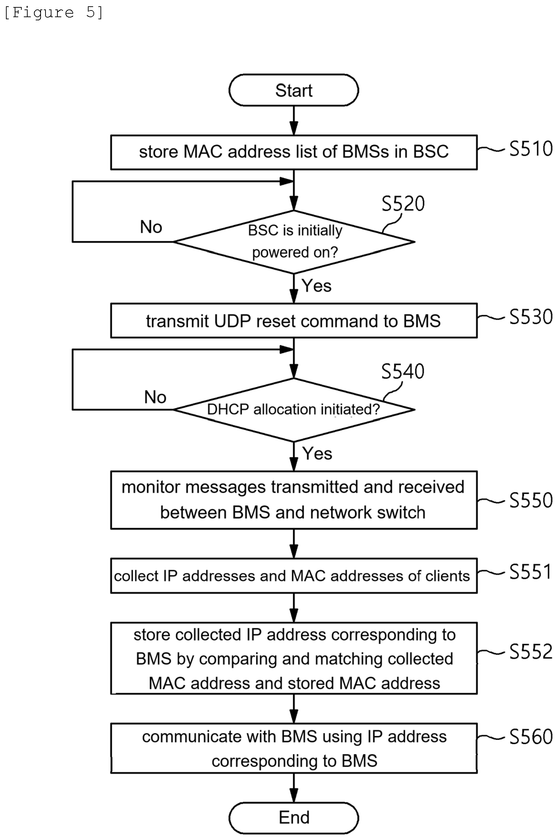

FIG. 5 is an operational flowchart of a communication control method for a battery system according to embodiments of the present invention.

The communication control method according to embodiments of the present invention may be performed by a battery system control apparatus 100 or a communication control apparatus including at least a portion of the battery system control apparatus 100. For convenience, the communication control apparatus will be designated below as the operating entity of the communication control method.

The communication control apparatus may store the MAC addresses of one or more BMSs (e.g., RBMSs) with which it wishes to communicate in advance (S510). The BMS MAC addresses may be managed in a table format, and directly entered by an administrator or received from a separate device.

When the battery system control apparatus is initially powered on (Yes in S520), the communication control apparatus may transmit a User Datagram Protocol (UDP) reset command to one or more battery management apparatuses connected with the battery system control apparatus (S530). This is because the BMS initiates a DHCP request immediately upon power-on, making it impossible to monitor DHCP allocations to the BMS while the BMS is already running.

Here, User Datagram Protocol (UDP) is a communication protocol that unilaterally transmits data from a sender to a receiver without going through a signaling process for sending or receiving information, which is less stable than TCP, but much faster.

Meanwhile, according to another embodiment of the present invention, instead of sending a UDP reset signal to the BMS, the same effect can be achieved through a hardware reset procedure for the BMS (e.g., powering down a Switching Mode Power Supply (SMPS) and restoring the SMPS after 2 seconds).

Thereafter, when the Dynamic Host Configuration Protocol (DHCP) allocation between the network switch and each battery management apparatus begins (Yes in S540), the communication control apparatus may monitor messages transmitted and received during the DHCP allocation process (S550) and collect the IP addresses and MAC (Media Access Control) addresses of the clients (BMSs) during monitoring (S551). Here, the MAC address of the client (BMS) may be collected from a DHCP Discover or DHCP Request message, and the IP address may be collected from a DHCP Response (Ack) message.

The communication control apparatus may match and store the collected IP address with a battery management apparatus having a MAC address matching the collected MAC address corresponding to the IP address (S552). More specifically, the communication control apparatus may identify a MAC address matching the collected MAC address among the MAC addresses of one or more battery management apparatuses (BMS) previously stored in a storage device, and match and store the collected IP address with the battery management apparatus having the identified MAC address.

Afterwards, the communication control apparatus may communicate with a corresponding BMS using the IP address corresponding to each BMS (S560).

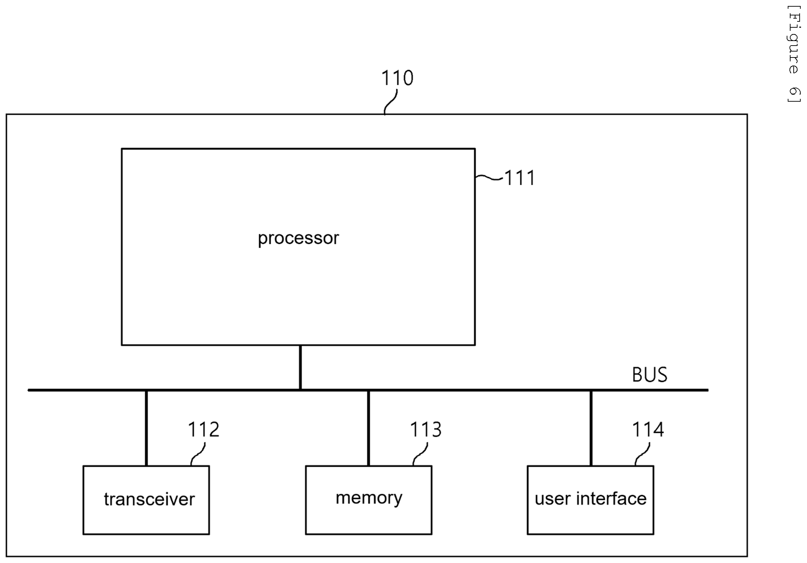

FIG. 6 is a block diagram of a communication control apparatus of a battery system according to embodiments of the present invention.

The communication control apparatus 110 according to embodiments of the present invention may be a communication control apparatus implemented within a battery system and may be implemented by including at least a part of a battery system controller (BSC).

The communication control apparatus 110 according to embodiments of the present invention may be a communication control apparatus for a battery system including one or more battery management systems (BMS) and a network switch, which may include at least one processor 111, a memory 113 storing at least one instruction executed by the processor, and a transceiver 112 connected to a network and performing communication. The communication control apparatus 110 may also include a user interface 114, a storage device (not shown), and the like. Respective components included in the communication control apparatus 110 may be connected via a bus and communicate with one another.

The at least one instruction executed by the processor may include an instruction to monitor a Dynamic Host Configuration Protocol (DHCP) allocation process between the network switch and each battery management apparatus; an instruction to collect client IP (Internet Protocol) addresses and MAC (Media Access Control) addresses during the monitoring; and an instruction to match and store the IP addresses with battery management apparatuses having MAC addresses that match the collected MAC addresses.

The at least one instruction may further include an instruction to send a User Datagram Protocol (UDP) reset command to one or more battery management apparatuses to which the battery system control apparatus is connected when the battery system control apparatus is initially powered up.

The at least one instruction may further include an instruction to preliminarily store MAC addresses of the one or more battery management apparatuses in a storage device.

The instruction to match and store the IP addresses with the battery management apparatuses having a MAC address matching the collected MAC address may include an instruction to identify, among the MAC addresses of one or more battery management apparatuses (BMSs) stored previously, a MAC address matching the collected MAC address; and an instruction to match and store the collected IP address with the battery management apparatus having the identified MAC address.

The at least one instruction may further include an instruction to communicate with the one or more battery management apparatuses using the IP addresses which have been matched and stored with the one or more battery management apparatuses.

The instruction to collect the client IP addresses and MAC addresses during the monitoring may include an instruction to collect the MAC address of the BMS included in a DHCP Discover or DHCP Request message; and an instruction to collect the IP address allocated to the BMS included in a DHCP response (Ack) message.

Meanwhile, according to embodiments, the processor may mean a central processing unit (CPU), a graphics processing unit (GPU), or a dedicated processor on which methods according to embodiments of the present invention are performed.

According to the above-described embodiment of the present invention, IP allocation to the BMS can be automatically performed, even if only inputting MAC address and managing are performed in the battery system control apparatus, thereby providing convenience in maintenance and facilitating analysis of communication abnormality cause.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A communication control method for a battery system control apparatus that connected to one or more battery management apparatus (BMS) and a network switch, the method comprising:
monitoring a Dynamic Host Configuration Protocol (DHCP) allocation process between the network switch and each battery management apparatus;
collecting client IP (Internet Protocol) addresses and MAC (Media Access Control) addresses during the monitoring; and
matching and storing the IP addresses with battery management apparatuses having MAC addresses that match the collected MAC addresses.

2. The method of claim 1, further comprising:
sending a User Datagram Protocol (UDP) reset command to one or more battery management apparatuses to which the battery system control apparatus is connected when the battery system control apparatus is initially powered up.

3. The method of claim 1, further comprising:
preliminarily storing MAC addresses of the one or more battery management apparatuses.

4. The method of claim 3, wherein the matching and storing of the IP addresses with the battery management apparatuses having a MAC address matching the collected MAC address includes:
identifying, among the MAC addresses of one or more battery management apparatuses (BMSs) stored previously, a MAC address matching the collected MAC address; and
matching and storing the collected IP address with the battery management apparatus having the identified MAC address.

5. The method of claim 1, further comprising:
communicating with the one or more battery management apparatuses using the IP addresses which have been matched and stored with the one or more battery management apparatuses.

6. The method of claim 1, wherein the collecting of the client IP addresses and MAC addresses during the monitoring includes:
collecting the MAC address of the BMS included in a DHCP Discover or DHCP Request message; and
collecting the IP address allocated to the BMS included in a DHCP response (Ack) message.

7. A communication control apparatus of a battery system including one or more battery management apparatuses (BMSs) and a network switch, the apparatus comprising:
at least one processor; and
a memory configured to store at least one instruction executed by the at least one processor,
wherein the at least one instruction includes:
an instruction to monitor a Dynamic Host Configuration Protocol (DHCP) allocation process between the network switch and each battery management apparatus;
an instruction to collect client IP (Internet Protocol) addresses and MAC (Media Access Control) addresses during the monitoring; and
an instruction to match and store the IP addresses with battery management apparatuses having MAC addresses that match the collected MAC addresses.

8. The apparatus of claim 7, wherein the at least one instruction further includes:
an instruction to send a User Datagram Protocol (UDP) reset command to one or more battery management apparatuses to which the battery system control apparatus is connected when the battery system control apparatus is initially powered up.

9. The apparatus of claim 7, wherein the at least one instruction further includes:
an instruction to preliminarily store MAC addresses of the one or more battery management apparatuses in a storage device.

10. The apparatus of claim 9, wherein the instruction to match and store the IP addresses with the battery management apparatuses having a MAC address matching the collected MAC address includes:
an instruction to identify, among the MAC addresses of one or more battery management apparatuses (BMSs) stored previously, a MAC address matching the collected MAC address; and
an instruction to match and store the collected IP address with the battery management apparatus having the identified MAC address.

11. The apparatus of claim 7, wherein the at least one instruction further includes:
an instruction to communicate with the one or more battery management apparatuses using the IP addresses which have been matched and stored with the one or more battery management apparatuses.

12. The apparatus of claim 7, wherein the instruction to collect the client IP addresses and MAC addresses during the monitoring includes:
an instruction to collect the MAC address of the BMS included in a DHCP Discover or DHCP Request message; and
an instruction to collect the IP address allocated to the BMS included in a DHCP response (Ack) message.

13. A computer-readable medium having recorded thereon a program for executing the method according to any one of claims 1 to 6 on a computer.
